# EUROPÄISCHE PATENTANMELDUNG

(11) **EP 0 528 335 A1**
(43) Veröffentlichungstag der Anmeldung: **24.02.1993**
(21) Anmeldenummer: 92113692.5
(22) Anmeldetag: 11.08.1992
(51) Int. Cl.: A61C 9/00

(54) **Halteelement zum Befestigen von Modellteilen beim Herstellen von Zahnersatz**

(30) Priorität: 16.08.1991 DE 4127183
(71) Anmelder: Zeiser, Manfred P.Dr., D-71701 Schwieberdingen (DE)
(72) Erfinder: Zeiser, Manfred P., Dr., W-7141 Schwieberdingen (DE)
(74) Vertreter: Hennig, Peter

(57) **Zusammenfassung**

Bei einem Halteelement (4) zum Befestigen von Modellteilen eines zahntechnischen Arbeitsmodells auf einer Modellsockelplatte (5), bestehend aus einem Stift (Teile 1, 3), der unterschiedliche Profile aufweisend am einen Ende (Teil 1) in eine vorgefertigte Ausnehmung (6) der aus verformbarem Material bestehenden Modellsockelplatte (5) unter Wärmeeinfluß eindrückbar ist und mit seinem anderen Ende (3) zum Aufnehmen des Modellteils dient, wird die Eindringtiefe des Stiftes (Teile 1, 3) in die Modellsockelplatte (5) durch mindestens einen seitlichen Anschlag (Arm 2) begrenzbar, derart, daß der Stift (Teile 1, 3) für das Modellteil gegenüber der Modellsockelplatte (5) sicher gegen Verdrehen fixiert ist. Das mit geringem Aufwand herstellbare und für die Verwendung bei verformbarem Material geeignete Halteelement (4) ermöglicht es, ein Modellteil mit nur einem einzigen Stift (Teile 1, 3) und daher auf engem Raum in einer Ausnehmung einer Modellsockelplatte (5) gegen Bewegungen sowohl quer zur Ebene der Modellsockelplatte (5) als auch parallel zu dieser genau zu fixieren und sich dennoch leicht lösen zu lassen.

## Beschreibung

### Stand der Technik

Die Erfindung geht aus von einem Halteelement nach dem Oberbegriff des Anspruches 1.

Beim Herstellen von Zahnersatz werden sogenannte Sägeschnittmodelle verwendet. Besonders für Zähne im Unterkiefer-Frontzahnbereich sind die dabei auftretenden Abschnitte so schmal, daß die eine Verdrehung verhindernde Anordnung von mindestens zwei Halteelementen nicht möglich ist. Der Platz reicht hierfür nicht aus. Außerdem besteht die Gefahr, daß die Retentionen der Halteelemente nahe dem Sägeschnitt liegen und keinen Halt finden. Nimmt man aber nur ein einziges Halteelement, dann fehlt die Sicherung gegen ein Verdrehen. Es ist aber wichtig, daß die Modellteile genau positioniert werden. Auch bei Verwendung von konischen und ähnlichen Profilen oder von im konischen Teil abgeflachten Halteelementen, die in die Modellsockelplatte oder in den den Sockel bildenden Gipsbrei eingebracht werden, erhält man nicht den erforderlichen Halt gegen Verdrehung. Ebenfalls unbefriedigend sind auf der Modellsockelplatte angebrachte Rillen oder Vertiefungen, weil ein exaktes Zurücksetzen der Modellteile wegen der Expansion des Gipses nicht möglich ist. Auch Materialien auf Harzbasis eignen sich nicht hierfür, weil beim Aushärten ein Schwund entsteht.

Abhilfe gegen Verdrehen wurde ferner durch eine Bohrung versucht, die vom laufenden Rand der Modellsockelplatte her senkrecht zum Halteelement angelegt und durch das Halteelement hindurch verlängert ist. Der Aufwand beim Herstellen der Modellsockelplatte und des Halteelementes sowie beim Handhaben dieser Teile ist aber so groß, daß diese Methode keine Chance für eine kommerzielle Verwertung bietet.

Aus der DE-A-29 49 697 sind Halteelemente bekannt, die in Bohrungen der Modellsockelplatte eingedrückt, eingeklebt oder anderweitig festgelegt sind. Die Platte selbst besteht aus verformbarem Material. Um das Einsetzen des Halteelementes zu erleichtern, wird das Halteelement und/oder der Bereich der Platte um die Bohrung herum erwärmt.

Eine Ausführungsform des bekannten Halteelementes (Fig. 8a) weist als Verdrehungsschutz eine Führungsfläche auf. Da das Halteelement jedoch in eine vorhandene Bohrung eingesetzt wird, ist nicht erkennbar, wie ein Verdrehen verhindert werden soll, vielleicht durch einen sehr engen Paßsitz, der aber grundsätzlich nicht angestrebt wird, um das Entfernen der Modellteile nicht zu erschweren. Das gleiche gilt für ein sechseckiges Profil, zumal die Bohrungen oder die Stiftaufnahmen durch örtliche Erwärmung erweitert werden oder sogar die Form des eintauchenden Stiftabschnittes aufweisen.

Auch das Halteelement mit einem zweiarmigen Stiftabschnitt gemäß den Figuren 8e bis 8g der DE-A-29 49 697 bietet keinen ausreichenden Schutz gegen Verdrehen, weil zunächst eine Hülse vorgesehen ist, die beide Arme aufnimmt. Wie die Arme direkt im Sockel fixiert werden können, ist in dieser Druckschrift nicht erläutert. Würde für beide Arme eine einzige Bohrung verwendet, dann wäre kein Schutz gegen Verdrehen gewährleistet, sondern erst mit zwei Bohrungen, wie es beispielsweise in der US-A-4 139 943 gezeigt ist. Diese Lösung wäre jedoch nicht nur fertigungstechnisch wenig sinnvoll, sondern auch dann nicht möglich, wenn Platz nur für eine Bohrung vorhanden ist.

Aus der US-A-4 721 464 ist es ferner bekannt, Zahnteile mit dem Gipssockel mittels Profilen zu positionieren. Dabei greifen die positiven Formteile des Haltestiftes in die Ausnehmungen des Modellsockels, die bereits beim Herstellen der Gipsform ausgebildet worden sind. Hier liegt ein völlig anders ablaufender Herstellungsvorgang vor, bei dem beispielsweise das negative Profil im Gipsbrei vor dem Erhärten ausgebildet sein muß, um später das Halteelement aufzunehmen. Für thermoplastische oder thermoelastische Materialien eignet sich das bekannte Halteelement nicht, besonders dann nicht, wenn nachträglich Bohrungen angelegt werden, in die die Halteelemente eingesetzt werden sollen.

### Aufgabe

Aufgabe der vorliegenden Erfindung ist es daher, ein mit geringem Aufwand herstellbares Halteelement zu schaffen, das mit nur einem einzigen Stift in einer Ausnehmung der Modellsockelplatte sowohl in zur Ebene der Modellsockelplatte parallelen Richtungen als auch quer zur Ebene der Modellsockelplatte und insbesondere gegen Verdrehen um seine Längsachse genau fixierbar ist, sich für verformbares Material eignet und sich dennoch leicht lösen läßt.

### Lösung

Zur Lösung der vorstehend umrissenen Aufgabe wird die im kennzeichnenden Teil des Anspruches 1 angegebene Erfindung vorgeschlagen.

### Vorteile der Erfindung

Mit der erfindungsgemäßen Gestaltung des Halteelementes wird erreicht, daß sich der Anschlag beim wärmebeeinflußten Einbringen des Halteelementes in die Modellsockelplatte in dieser im Bereich der betreffenden Ausnehmung negativ abformt und somit eine gegen Verdrehen sichere Führung für das Halteelement bewirkt. Außerdem wird ein definierter Höhenanschlag erhalten, bei dessen Erreichen auch Bewegungen des Halteelementes in zur Ebene der Modellsockelplatte parallelen Richtungen ausgeschlossen sind. Damit ist es möglich, einzelne Segmente eines Sägeschnittmodells mit nur einem einzigen Halteelement sicher, d.h. ohne axiales und radiales bzw. seitliches Spiel anzuordnen.

Vorteilhafte Weiterbildungen der Erfindung sind in den Unteransprüchen angegeben, die hiermit, um Wiederholungen zu vermeiden, ausdrücklich auch zum Gegenstand der Beschreibung gemacht werden.

Die Weiterbildung der Erfindung nach Anspruch 2 erhöht die Sicherung sowohl gegen Verdrehen als auch gegen zu tiefes Eindringen des Halteelementes in die Modellsockelplatte.

Im Fall der Ausgestaltung gemäß Anspruch 3 dringen die Arme nur teilweise in die Modellsockelplatte ein, und zwar jeweils mit ihrem äußeren Ende, wodurch trotz geringerer Gesamteindringtiefe die Sicherung gegen Verdrehen vergrößert wird.

Die Weiterbildungen nach den Ansprüchen 4 bis 7 ermöglichen die Wahl zwischen verschiedenen Gestaltungen der Arme, um jeweils, abhängig von den speziellen Erfordernissen, eine optimale Wirkung zu erzielen.

Um die Friktion zwischen Halteelement und Ausnehmung gering zu halten, ist das Halteelement gemäß Anspruch 8 weitergebildet. Dabei stimmt man Ausnehmung und Konuswinkel so aufeinander ab, daß im konisch sich verjüngenden Teil das Halteelement nur teilweise Kontakt mit der Wandung der Ausnehmung hat. Bei konischen Ausnehmungen ist dies im Bereich des konisch verjüngten Endes der Fall, bei zylindrischen Ausnehmungen (Bohrungen) im oberen Bereich.

Die Weiterbildung nach Anspruch 9 läßt ebenfalls Freiheiten bei der Anpassung an die unterschiedlichen Bedingungen hinsichtlich

Material und Form. Mit der Weiterbildung nach Anspruch 10 wird erreicht, daß das Halteelement aus Bandmaterial ausgestanzt werden kann und damit besonders billig in der Herstellung ist.

Im Anspruch 11 sind die günstigsten Materialarten angegeben.

### Erläuterung der Erfindung

Ein Ausführungsbeispiel der Erfindung wird anhand der Figuren 1 bis 5 erläutert.

Es zeigen
- Figur 1: das Halteelement,
- Figur 2: eine Modellsockelplatte,
- Figur 3: die Modellsockelplatte mit teilweise eingesetzten Halteelementen,
- Figur 4: die Modellsockelplatte mit eingedrückten Halteelementen, und
- Figur 5: die Modellsockelplatte mit aus der Modellsockelplatte entnommenen Halteelementen und verbliebenen Abformungen durch die Arme der Halteelemente.

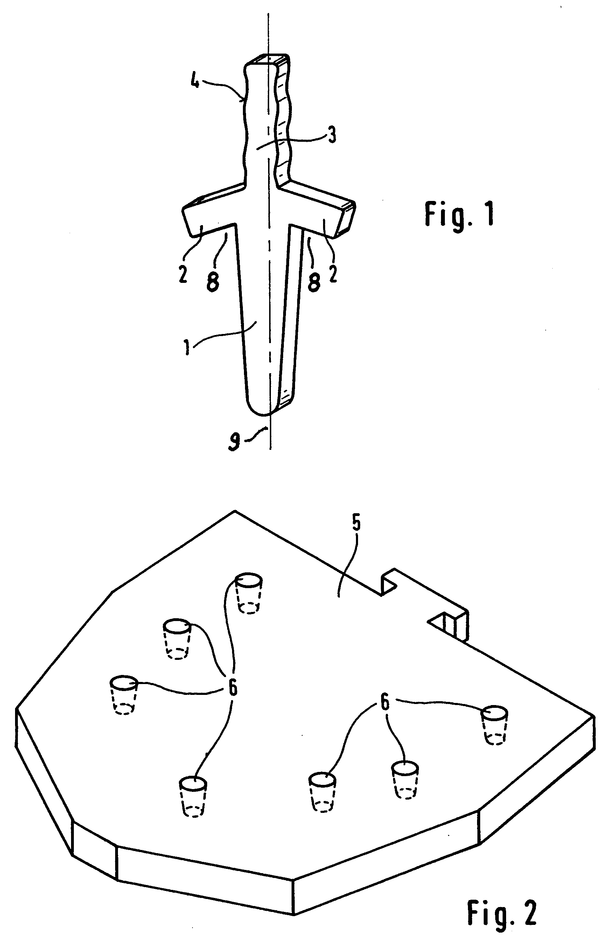

In Figur 1 ist das Halteelement 4 mit zwei Armen (Anschlägen) 2 versehen, die etwa im Bereich zwischen dem Teil 1 des Halteelementes 4 liegen, der in die Modellsockelplatte 5 (Figur 2) eindringt, und dem Teil 3, der mit einem nicht dargestellten Modellteil verbunden ist. Die dem Teil 1 des Stiftes (Teile 1, 3) benachbarten Seitenflächen 8 der Arme 2 bilden mit der Längsachse 9 des Teils 1 einen spitzen Winkel.

In Figur 2 weist die vorfabrizierte Modellsockelplatte 5 mehrere vorgefertigte oder individuell angebrachte Ausnehmungen 6 auf, die zylindrisch, stufig und/oder konisch gestaltet sein können.

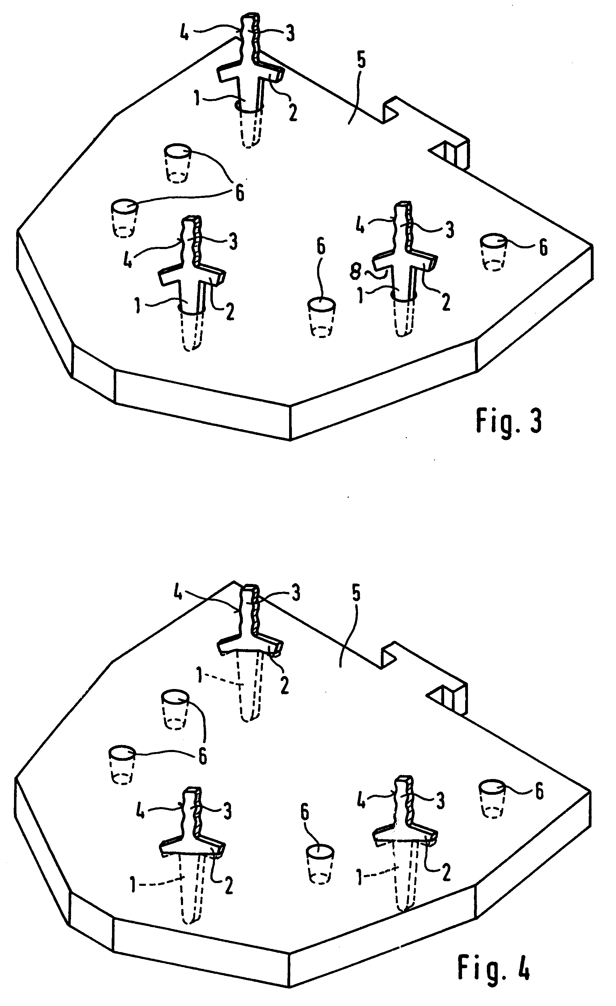

In Figur 3 sind die Halteelemente 4 in die Modellsockelplatte 5 eingesetzt und in Figur 4 vollständig in diese eingedrückt.

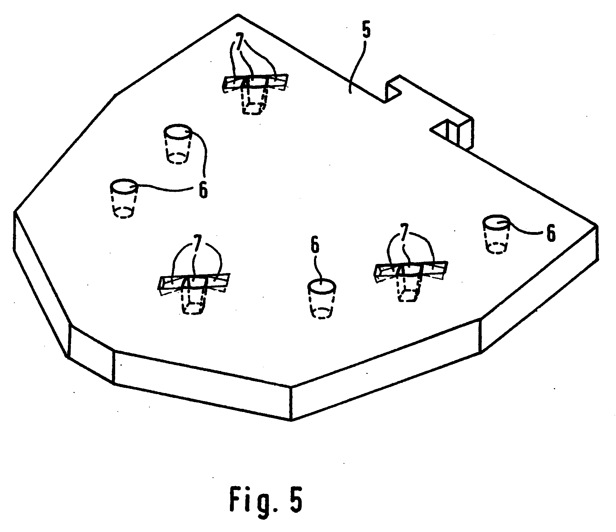

Zum Eindrücken eines Halteelementes 4 in die Modellsockelplatte 5 wird entweder das Halteelement 4 oder der die betreffende Ausnehmung umgebende Bereich erwärmt. Sodann wird der Teil 1 des Halteelementes 4 in die Ausnehmung 6 eingedrückt. Nach erfolgtem Abkühlen kann das betreffende Halteelement 4 aus der Modellsockelplatte 5 gezogen werden, wobei nach Entnahme der Halteelemente 4 entsprechende Eindrücke 7 der Arme 2 des Halteelementes 4 in der Modellsockelplatte 5 als Abformungen im Bereich der Ränder der Ausnehmungen 6 (Figur 5) zurückbleiben.

### Bezugszeichenliste

- 1: Teil (des Stiftes)
- 2: Arme (des Stiftes)
- 3: Teil (des Stiftes)
- 4: Halteelement (für das Modellteil)
- 5: Modellsockelplatte
- 6: Ausnehmungen (in der Modellsockelplatte 5)
- 7: Eindrücke (in der Modellsockelplatte 5)
- 8: untere Seitenflächen (der Arme 2)
- 9: Längsachse (des Teiles 1)

## Patentansprüche

1. Halteelement (4) zum Befestigen von Modellteilen eines zahntechnischen Arbeitsmodells auf einer Modellsockelplatte (5), bestehend aus einem Stift (Teile 1, 3), der unterschiedliche Profile aufweisend mit seinem einen Ende (Teil 1) in eine vorgefertigte Ausnehmung (6) der aus verformbarem Material bestehenden Modellsockelplatte (5) unter Wärmeeinfluß eindrückbar ist und mit seinem anderen Ende (Teil 3) zum Aufnehmen des Modellteils dient, **dadurch gekennzeichnet,** daß die Eindringtiefe des einen Teils (1) des Stiftes (Teile 1, 3) in die Modellsockelplatte (5) durch mindestens einen seitlichen Anschlag (Arm 2) begrenzbar ist, derart, daß der Stift (Teile 1, 3) das Modellteil gegenüber der Modellsockelplatte (5) gegen Verdrehen sicher fixiert.

2. Halteelement (4) nach Anspruch 1, **dadurch gekennzeichnet,** daß zwei einander gegenüberliegende Anschläge (Arme 2) vorgesehen sind.

3. Halteelement (4) nach Anspruch 2, **dadurch gekennzeichnet,** daß die Anschläge als Arme (2) ausgebildet sind, deren dem Teil (1) des Stiftes (Teile 1, 3) benachbarte Seitenflächen (8) mit der Längsachse (9) des einen Teils (1) des Stiftes (Teile 1, 3) einen spitzen Winkel bilden.

4. Halteelement (4) nach Anspruch 3, **dadurch gekennzeichnet,** daß die Arme (2) planparallel geformt sind.

5. Halteelement (4) nach Anspruch 3, **dadurch gekennzeichnet,** daß sich die Arme (2) senkrecht zur Längsachse (9) des einen Teils (1) des Stiftes (Teile 1, 3) gesehen nach außen hin erweitern.

6. Halteelement (4) nach einem der Ansprüche 3 bis 5, **dadurch gekennzeichnet,** daß die Arme (2) in Richtung zum der Modellsockelplatte (5) zugeordneten Ende (Teil 1) des Stiftes (Teile 1, 3) hin abgebogen sind.

7. Halteelement (4) nach einem der Ansprüche 3 bis 6, **dadurch gekennzeichnet,** daß der dem Modellteil zugeordnete (obere) Teil der Arme (2) parallel zur Oberfläche der Modellsockelplatte (5) verläuft.

8. Halteelement (4) nach einem der Ansprüche 1 bis 7**, dadurch gekennzeichnet,** daß der der Modellsockelplatte (5) zugeordnete eine Teil (1) des Stiftes (Teile 1, 3) sich zu seinem Ende hin, z.B. konisch, verjüngt.

9. Halteelement (4) nach einem der Ansprüche 1 bis 8, **dadurch gekennzeichnet,** daß der der Modellsockelplatte (5) zugeordnete eine Teil (1) des Stiftes (Teile 1, 3) gegenüber dem dem Modellteil zugeordneten Teil (3) des Stiftes (Teile 1, 3) unterschiedliche Schnittflächen und/oder Profile aufweist.

10. Halteelement (4) nach einem der Ansprüche 1 bis 9, **gekennzeichnet durch** ein planparalleles Seitenprofil.

11. Halteelement (4) nach einem der Ansprüche 1 bis 10, **dadurch gekennzeichnet,** daß es aus Metall, vorzugsweise aus einer Messinglegierung, gefertigt ist.
